Europäisches Patentamt

European Patent Office

Office européen des brevets

(19)

(11) Publication number: 0 070 350
B1

(12)                    EUROPEAN PATENT SPECIFICATION

(45) Date of publication of patent specification: **04.12.85**    (51) Int. Cl.⁴: **F 16 K 3/18**

(21) Application number: **81890124.1**

(22) Date of filing: **21.07.81**

(54) **Expanding gate valve with position responsive interlock.**

(43) Date of publication of application:
**26.01.83 Bulletin 83/04**

(45) Publication of the grant of the patent:
**04.12.85 Bulletin 85/49**

(84) Designated Contracting States:
**AT GB IT**

(56) References cited:
**US-A-2 855 175**
**US-A-3 006 601**
**US-A-3 051 434**
**US-A-4 188 014**
**US-A-4 193 577**

(73) Proprietor: **ACF INDUSTRIES, INCORPORATED**
**750 Third Avenue**
**New York, NY 10012 (US)**

(72) Inventor: **Alvarez, Patricio D.**
**2509 Davis**
**Rosenberg Texas 77471 (US)**
Inventor: **Trevino, Robert J.**
**7614 McHenry**
**Houston Texas 77087 (US)**

(74) Representative: **Kretschmer, Adolf, Dipl.-Ing.**
**et al**
**Schottengasse 3a**
**A-1014 Wien (AT)**

Courier Press, Leamington Spa, England.

## Description

The invention relates to a gate valve structure of the expanding type having a valve chamber and an expanding gate assembly mounted in the valve chamber for movement between open and closed positions, the gate assembly including a gate member connected to a valve stem and a segment member carried by the gate member with wedging surfaces between the members permitting a wedging action to provide lateral expansion therebetween at fully open and closed positions, a rocker arm pivotally mounted to a side of said gate member and having opposite ends, said rocker arm having a slot, a bearing pin extending from a side of said segment member through said slot, and an elongate sliding surface contained within said valve chamber and extending generally parallel to the direction of movement of the gate assembly and cooperating with projections at the opposite ends of the rocker arm to hold the latter in its locking position for preventing any expansion of the gate assembly on its travel between the ends of its stroke.

Heretofore, position responsive interlock assemblies have been utilized with an expanding gate valve to maintain the gate and segment members in a collapsed position during travel between open and closed positions and to permit the gate and segment members to expand at the open and closed positions of the gate valve assembly. Specific examples thereof are disclosed by US—A—2 583 512, US—A—2 855 175 and US—A—4 188 014.

In earlier devices the rocker arm was actuated either by cooperating curved end faces at the opposite ends of the rocker arm and lugs on the side of the gate member (US—A—2 855 175) or by a pin-slot arrangement (US—A—4 188 014). While the former is subject to great and uncontrollable friction, one disadvantage of the latter was that the stresses between the pin and the slot acted on a relatively small area which resulted in galling of the pin and the slot even though the movement through this arrangement was less unsatisfactory. Another criterion for reliable operation of the mechanism for expanding the gate assembly in its open and closed positions is the size of the moment arm of the force acting between the respective end of the rocker arm and the sliding surface. Heretofore, the pivot axis of the rocker arm was located adjacent said sliding surface and the pin and slot or similar cooperating means were remote therefrom. In a structure of that kind the rocker arm has a tendency to pivot about the point where it engages the sliding surface. This tendency impedes the rocker arm from quickly moving into a locking position upon displacement of the gate assembly from its expanded position.

The invention is intended to remedy these drawbacks. It solves the problem in that the rocker arm is pivotally and slidably connected to the segment member by means of a slidable bearing member provided between said bearing pin and said slot, and that said slot is adjacent said sliding surface and said pivot axis is remote from said sliding surface. The advantages offered by the invention are mainly that the moment arm of the force acting between the respective end of the rocker arm and the sliding surface is substantially increased in comparison with the prior art, the wear resistance of the pin and slot arrangement is remarkably increased, and there is no need to use a sliding surface having cut-out portions between its ends so that any special and relatively expensive manufacturing operations are eliminated and a sliding surface of optimum strength along its entire length is provided.

The invention is described in detail below with reference to drawings which illustrate specific embodiments, in which:

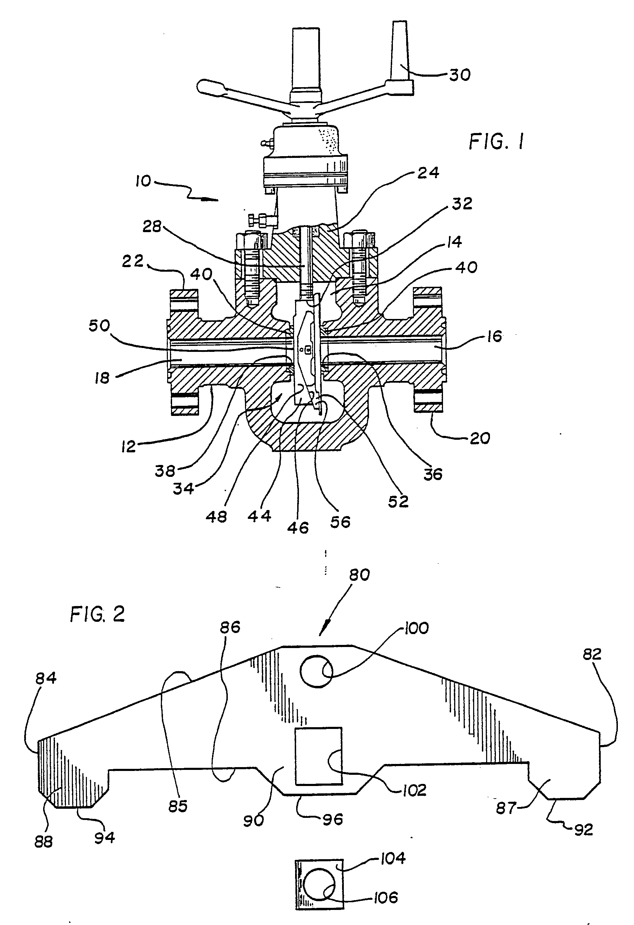

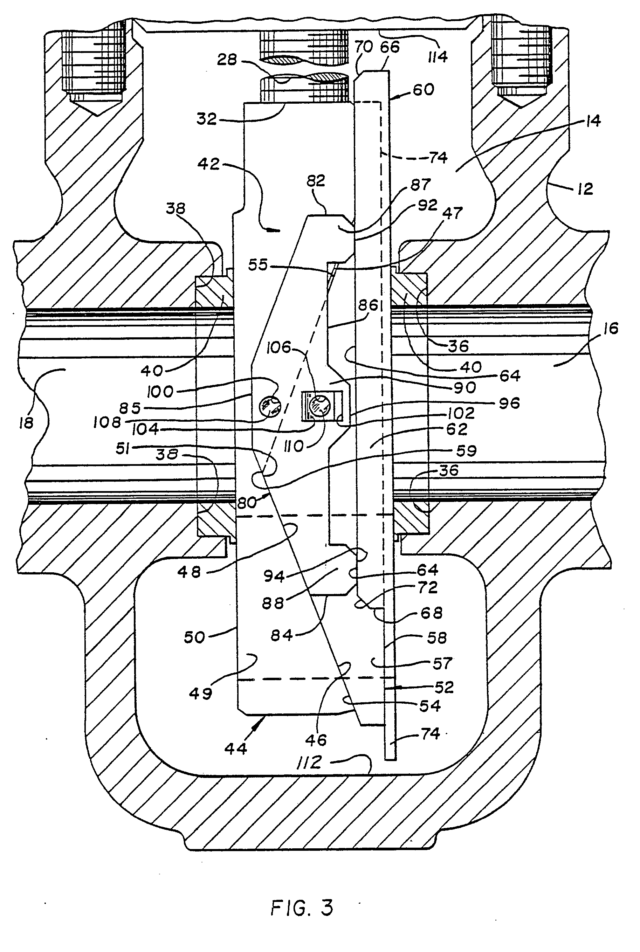

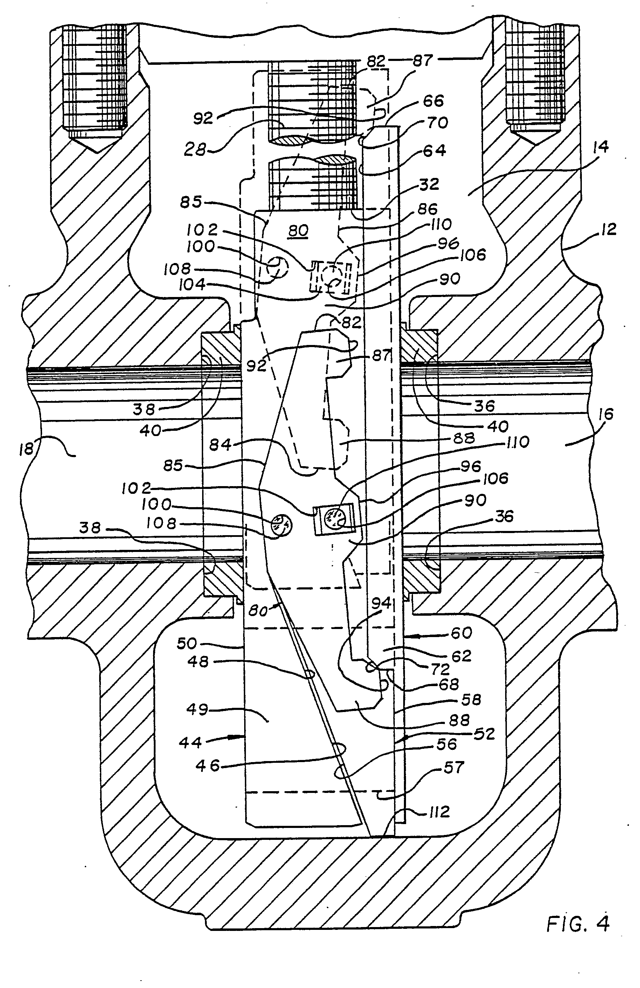

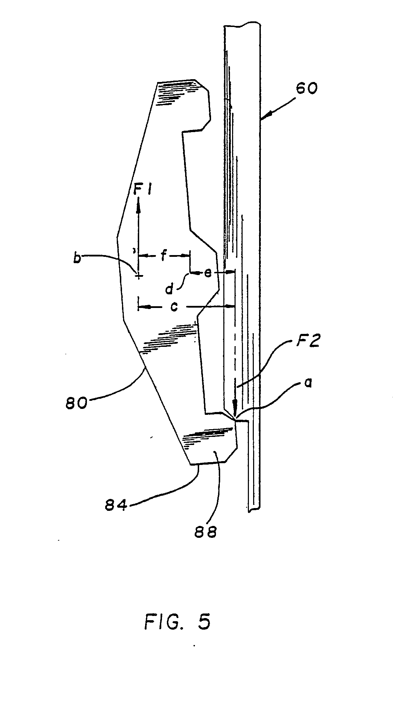

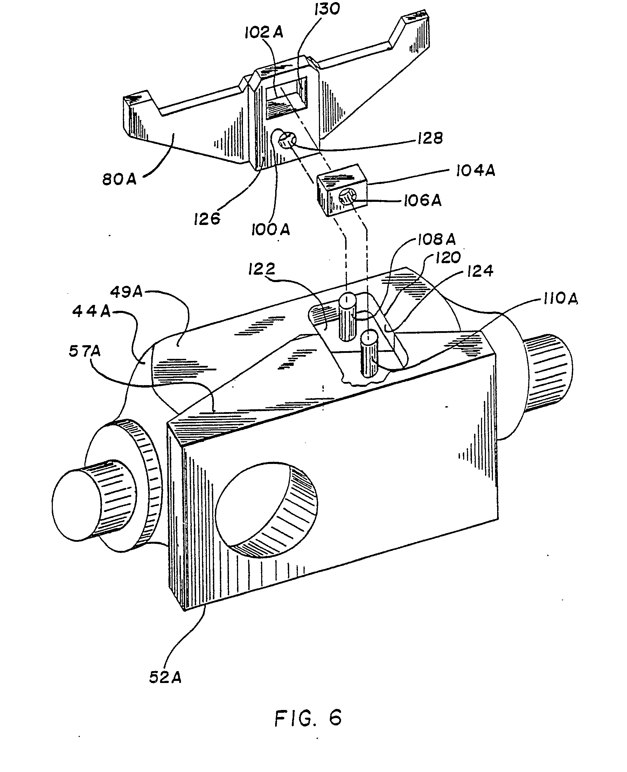

Fig. 1 is a sectional view, certain portions shown in elevation, of the gate valve structure embodying the present invention shown in the embodiment illustrated in Figs. 3 and 4; Fig. 2 is a front view of the rocker arm and bearing block shown in Figs. 1, 3 and 4 removed from the valve chamber and with the bearing block and pin removed from the slot of the rocker arm; Fig. 3 is a sectional view of a portion of the gate valve assembly shown in Fig. 1 with the gate assembly in an intermediate position wherein the position responsive interlock assembly maintains the gate and segment in their fully collapsed position; Fig. 4 is a sectional view of a portion of the gate valve assembly shown in Fig. 1 with the dashed lines showing the gate assembly in its open position, and the solid lines showing the gate assembly in its closed position wherein the position responsive interlock allows the gate and segment to reach their expanded position; Fig. 5 is a plan view of a rocker arm and seat skirt comparatively illustrating the forces acting on the rocker arm when displaced from its closed position for the specific embodiment of the present invention and the embodiment illustrated in US—A—4 188 014; and Fig. 6 is a perspective view of a modified rocker arm, gate and segment designed for use with the remainder of the gate assembly as shown in Figs. 1, 3 and 4 wherein the rocker arm and bearing block are exploded away from the gate and segment.

In Figs. 1—4, there is illustrated the gate valve of the invention generally designated at 10. Gate valve 10 includes a valve body 12 having a valve chamber 14, therein. Inlet and outlet flow passages 16 and 18 communicate with valve chamber 14. Flanges 20 and 22 at the ends of valve body 12 may be suitably connected to a pipeline or other flow system as is well known in the art. A bonnet 24 is bolted to valve housing 12. A valve stem 28 is positioned within the bonnet 24 in a conventional fashion for reciprocating movement with respect thereto, and has the outward end thereof (not illustrated) connected to a handwheel 30 and the inward end 32 thereof connected to a gate member 44 in a conventional fashion. Valve housing 12 includes a pair of annular recesses 36 and 38 formed or cut therein and extending around the portions of inlet and outlet flow passages 16 and 18, respectively, adjacent valve chamber 14. A seat element 40 is positioned or fit within each one of annular recesses 36 and 38. The expanding gate valve assembly generally designated at 34 is positioned within valve chamber 14 for reciprocal movement therein in a direction generally transverse to the direction of flow between open and closed positions. Gate assembly 34 is generally comprises of a gate or gate member 44, a segment or segment member 52, and the position responsive interlock assembly generally designated at 42. Gate 44 and segment 52 have parts therein which allow for the passage of fluid therethrough when gate assembly 34 is in an open position.

Gate 44 includes a V-shaped recess 46 which defines upper and lower faces 47 and 48 that intersect to form a recess apex 51, opposite sides 49, and a generally planar sealing surface 50 facing the downstream seat element 40. Segment 52 is positioned opposite gate 44 and has a complementary V-shaped face 54 which defines upper and lower faces 55 and 56 that intersect to form a face apex 59, a pair of opposite sides 57, and an outwardly facing surface 58. When gate valve assembly 34 is collapsed, the V-shaped surfaces of gate 44 and segment 52 fit together so that recess and face apices 51 and 59 are generally coincident.

Forming an important feature of applicants' invention is the position responsive interlock assembly which allows gate 44 and segment 52 to expand when gate assembly 34 is in either an open or closed position thereby forming an effective seal between it and seats 40; but maintaining gate 42 and segment 52 in collapsed position when traveling between the open and closed positions thereby reducing the chances that seats 40 will bind gate assembly 34. Position responsive interlock assembly 42 is primarily comprised of a seat skirt 60 and a rocker arm 80 and the accompanying structure connecting rocker arm 80 to gate 44 and segment 52. Seat skirt 60 is positioned between segment 52 and the downstream seat element 40. Seat skirt 60 has a pair of generally parallel and spaced apart inwardly extending elongate flanges 62 joined by a generally planar skirt body 74. Figs. 1 and 3—4 illustrate only one flange 62 and hereinafter only the illustrated flange 62 and the structure associated therewith will be discussed. Flange 62 includes an elevated smooth sliding surface 64 with beveled portions 70 and 72 adjacent the opposite ends 66 and 68 thereof, respectively.

An elongate member or rocker arm 80 has opposite ends 82 and 84, and edges 85 and 86. A pair of projections 87 and 88 extend downwardly from one edge 86 (the right hand edge as viewed in Figs. 1, 3—4) adjacent opposite ends 82 and 84, respectively. Projections 87 and 88 have respective smooth sliding surfaces 92 and 94. Rocker arm 80 further includes a circular aperture 100 and a rectangular slot 102. A bearing block 104 has a cylindrically shaped passageway 106 therein and is slidably received within slot 102 for only longitudinal movement therein. A pivot pin 108 extends from side 49 of gate 44 and is journaled within aperture 100. A bearing pin 110 extends from side 57 of segment 52 and is journaled within bearing block passageway 106. Thus, rocker arm 80 is pivotally connected to gate 44, and pivotally and slidably connected to segment 52.

Referring to Fig. 3, rocker arm 80 is aligned in the general direction of movement of expanding gate valve assembly 34 so as to be in its so-called locking position. Sliding surfaces 92 and 94 of projections 87 and 88, respectively, are generally parallel to and slidingly engage elevated sliding surface 64 of skirt flange 62 so that rocker arm 80 slides along skirt flange 62 and is prevented from pivoting. Consequently, gate 44 and segment 52 are maintained in their collapsed position as along as sliding surfaces 92 and 94 engage the elevated sliding surface 64.

Referring to Fig. 4, when expanding gate valve assembly 34 approaches its closed position, segment 52 encounters the lower portion of valve chamber 14 and ceases its downward movement. Skirt flange 62 is dimensioned so that just prior to segment 52 encountering valve chamber 14, lower projection 88 passes the flange end 68 (the end nearest the bottom of valve chamber 14) whereby rocker arm 80 is then free to pivot about pivot pin 108 in a counter clockwise direction as viewed in Figs. 1, 3 and 4. After segment 52 has ceased moving, gate 44 continues to move downward a slight distance relative thereto which displaces pivot pin 108 relative to bearing pin 110 from their original alignment. In response to this displacement, rocker arm 80 rotates in a counter clockwise direction as viewed in Figs. 1, 3 and 4. As gate valve assembly 34 moves into its closed position the upper faces of V-shaped recess 46 and face 54 wedge together whereby gate 44 and segment 52 expand away from each other by bearing block 104 and bearing pin 110 moving through a slot 102. The contact stresses associated with this movement are distributed by bearing block 104 to a sufficient degree such that no galling of bearing pin 110, bearing block 104 or slot 102 occurs whereby premature maintenance and shutdown of the valve are reduced.

Upon the initial upward movement of valve stem 28 that displaces gate valve assembly 34 from its closed position, gate 44 moves upwardly relative to segment 52. As a result thereof, pivot pin 108 and bearing pin 110 move the general transverse alignment and rocker arm 80 simultaneously rotates clockwise into its locking position.

While in its closed position, a significant fluid pressure is built up on the upstream side of expanding gate valve assembly 34 which causes rocker arm 80 to exert a potentially damaging blow to skirt flange 62. Thus, it is advantageous that applicants' rocker arm 80 and skirt flange 62 are dimensioned so that rocker arm 80 strikes skirt flange 62 at a location where it is supported by valve seat 40 and thus, reduces the possiblity that skirt flange 62 would be damaged.

Referring to Fig. 5, when gate valve assembly 34 is collapsed from its closed position, rocker arm 80 tends to rotate about the point (point "b"). The rocker arm projection 88 engages the beveled portion of skirt flange 62, and provides a resistive force at point "a" to rocker arm 80 pivoting about its intended pivot point which is the point where rocker arm 80 is pivotally connected to gate 44 (illustrated as point "b"). The force (represented by force vector F2) that pushes on the rocker arm 80 acts over the perpendicular distance "c" to aid in overcoming the resistance of the gate 44 and segment 52 to remain in the wedged position.

Still referring to Fig. 5, United States Patent No. 4,188,014 shows a device that has the pivotal connection between the gate assembly and rocker arm at a point (point "d") substantially closer to the edge of the rocker arm adjacent the seat skirt flange than applicants' pivotal connection point "b". The moment of force F2 about point "d" equals the magnitude of force F2 times distance "e". Since distance "c" is greater than distance "e" by distance "f", applicants' force F2 does not have to be as great as similar forces associated with an earlier device (United States Patent No. 4,188,014) to overcome the same resistive force at point "a"; and applicants' invention provides an improved ability to overcome any tendency on the part of the rocker arm to rotate about point "a".

The rocker arm displays the same tendency to improperly rotate when the gate valve is displaced from its open position as when displaced from its closed position. It is overcome in a fashion similar to that described above so that the above discussion will suffice for any further discussion of this aspect of applicants' invention when the gate valve is displaced from its open position.

In a manner generally similar to that previously described for gate valve assembly 34 moving into its closed position, upper projection 87 of rocker arm 80 passes one end 66 of flange 62 just prior to segment 52 encountering the bonnet so that rocker arm 80 is free to rotate in a clockwise direction in response to the displacement of pivot pin 108 when gate 44 moves upwardly relative to segment 52. Gate 44 and segment 52 also expand away from each other by movement of bearing block 104 and bearing pin 110 through slot 102.

The initial downward movement of valve stem 28 causes gate 44 to move downwardly relative to segment 52 which in turn causes pivot pin 108 and bearing pin 110 to move into general transverse alignment and rocker arm 80 to rotate counter clockwise back into its locking position while gate 44 and segment 52 simultaneously collapse together.

Fig. 6 illustrates a modification of the rocker arm and adjacent sides of the gate and segment of the previously described specific embodiment. The adjacent sides 49A and 57A of gate 44A and segment 52A, respectively, contain a recess 120 therein. Recess 120 has a bottom surface 122 and an upstanding side surface 124. Pivot pin 108A and bearing pin 110A extend outwardly from those portions of bottom surface 122 contained in gate 44A and segment 52A, respectively. Rocker arm 80A includes a shoulder 126 protruding therefrom. Shoulder 126 has a cylindrical passageway 128 therein that joins aperture 100A, and a square passageway 130 therein that joins slot 102A. Pivot pin 108A is journaled within cylindrical passageway 128 and aperture 100A. Bearing block 104A is slidably received within square passageway 130 and the slot 102A. Bearing pin 110 A is journaled within passageway 106A.

Recess 120 and shoulder 126 are dimensioned so as to not restrict the operative movement of rocker arm 80A so that the modified structure functions in a manner identical to that of the unmodified specific embodiment described above. Shoulder 126 in cooperation with recess 120 provides additional support to rocker arm 80A so that it may adequately perform its intended function in larger sized applications.

It is seen that applicants' invention provides an expanding gate valve assembly that has an improved position responsive interlock assembly that reduces contact stresses that occur when the gate and segment move laterally of each other. Further, applicants' seat skirt is relatively inexpensive to manufacture, and is of an optimum strength along its length thereof. The rocker arm and seat skirt are positioned so that upon displacement of the valve from its closed position the rocker arm strikes the seat skirt at a point where it is supported by the seat. Finally, applicants' rocker arm more easily overcomes its tendency to rotate about the point where it engages the skirt flange when the gate valve assembly is displaced from its fully expanded position.

**Claims**

1. A gate valve structure of the expanding type having a valve chamber (14) and an expanding gate assembly (34) mounted in the valve chamber for movement between open and closed positions, the gate assembly including a gate member (44; 44A) connected to a valve stem (28) and a segment member (52; 52A) carried by the gate member with wedging surfaces (46; 54) between the members permitting a wedging action to provide lateral expansion therebetween at fully open and closed positions, a rocker arm (80; 80A) pivotally mounted to a side (49, 57; 49A, 57A) of said gate member and having opposite ends (82, 84), said rocker arm having a slot (102; 102A), a bearing pin (110; 110A) extending from a side (49, 57; 49A, 57A) of said segment member through said slot (102; 102A), and an elongate sliding surface (60) contained within said valve chamber (14) and extending generally parallel to the direction of movement of the gate assembly (34) and cooperating with projections (87, 88) at the opposite ends (82, 84) of the rocker arm (80; 80A) to hold the latter in its locking position for preventing any expansion of the gate assembly (34) on its travel between the ends of its stroke, characterised in that the rocker arm (80; 80A) is pivotally and slidably connected to the segment member (52; 52A) by means of a slidable bearing member (104; 104A) provided between said bearing pin (110; 110A) and said slot (102; 102A), and that said slot (102; 102A) is adjacent said sliding surface (60) and said pivot axis (b) is remote from said sliding surface (60).

2. A gate valve structure as claimed in claim 1 wherein said sliding surface (60) has, as known per se, opposite ends (66, 68) adjacent the uppermost and lowermost positions of travel of the gate assembly (34) so that said projection (86, 88) leading with respect to the direction of travel of the gate assembly is disengaged from said sliding surface thereby allowing said rocker arm (102; 102A) to pivot about said pivot axis (b) once the gate and segment members (44, 52; 44A, 52A) move relative to each other.

3. A gate valve structure as claimed in claim 1 or 2 wherein said gate mamber (44A) and segment member (52A) have a recess (120) therein, a pivot pint (108A) and said bearing pin (110A) being contained within said recess, said rocker arm (80A) having a shoulder (126) protruding therefrom, said shoulder being received within said recess and pivotally connected to said pivot pin.

## Revendications

1. Système de vanne coulissante du type comprenant une chambre de soupape (14) et un ensemble de tiroir expansible (34) monté dans ladite chambre de soupape pour un mouvement entre la position ouverte et fermée, l'ensemble de tiroir comprenant un élément de tiroir (44; 44A) relié à une tige de soupape (28) et un élément de segment (52; 52A) porté par l'élément de tiroir, des surfaces de calage (46, 54) agencées entre lesdites éléments qui permettent une action de calage facilitant une expansion latérale entre ces derniers dans la position complètement ouverte et fermée, un basculeur (80; 80A) étant articulé à un côté (59, 57; 49A, 57A) dudit élément de tiroir et ayant des extrémités (82, 84) opposées, ledit basculeur ayant une fente (102; 102A), un tenon à palier (110; 110A) s'étendant d'un côté (49, 57; 49A, 57A) de l'élément de segment à travers de ladite fente (102; 102A) et une surface glissante (60) allongée et emboîtée dans la chambre de soupape (14) et s'étendant généralement en parallele relatif au sens de mouvement de l'ensemble de tiroir (34) et coopérant avec des sailles (87, 88) aux extrémités opposées (82, 84) du basculeur (80; 80A) pour maintenir ce dernier dans sa position de verrouillage pour empêcher l'ensemble de tiroir (34) de toute expansion dans son parcours entre les extrémités de sa course, caractérisé en ce que le basculeur (80; 80A) est relié à l'élément de segment (52; 52A) de manière pivotante et coulissante par un élément de palier (104; 104A) glissant et disposé entre ledit tenon à palier (110; 110A) et ladite fente (102; 102A), et en ce que ladite fente (102; 102A) touche à ladite surface glissante (60) et ledit axe de pivot (b) est à distance de ladite surface glissante (60).

2. Système de vanne coulissante selon la revendication 1, dans lequel ladite surface glissante (60) a, de facon connue en soi, des extrémités opposées (66, 68) et adjacentes à la position la plus haute et la plus basse de la course de l'ensemble de tiroir (34) de sorte que ladite saillie (86, 88) qui gagne le devant relatif au sens de la course de l'ensemble de tiroir est gégagée de la surface glissante de manière à permettre que ledit basculeur (102; 102A) pivote autour dudit axe (b) de pivot lorsque les éléments de tiroir et de segment (44, 52; 44A, 52A) sont en mouvement l'un relatif à l'autre.

3. Système de vanne coulissante selon l'une des revendications 1 ou 2, dans lequel ledit élément de tiroir (44A) et ledit élément de segment (52A) ont des évidements (120), un pivot (108A) et ledit tenon à palier (110A) étant agencés dans ledit évidement, ledit basculeur (80A) ayant une épaule (126) qui fait saillie de ce dernier, ladite épaule s'emboîtant dans ledit évidement et étant articulée audit pivot.

## Patentansprüche

1. Expansionsschieber mit einer Kammer (14) und einer darin zwischen einer Offenstellung und einer Schließstellung bewegbar angeordneten ausdehnbaren Schieberplatte (34), die einen mit einer Ventilspindel (28) verbundenen Plattenteil (44; 44A) und einen von diesem getragenen Segmentteil (52; 52A) aufweist, wobei zwischen diesen beiden Teilen Keilflächen (46; 54) zur Erzielung einer Keilwirkung für eine seitliche Ausdehnung in der Offenstellung und in der Schließstellung vorgesehen sind, einer an einer Seitenfläche (49; 49A) des Plattenteiles schwenkbar angeordneten Wippe (80; 80A) mit entgegengesetzten Armenden (82, 84) und einem Schlitz (102; 102A), durch den ein von einer Seitenfläche (57; 57A) des Segmentteiles abstehender Stift (110; 110A) hindurchragt, und einer in der Kammer (14) befindlichen langgestreckten Gleitfläche, die allgemein parallel zur Bewegungsrichtung der Schieberplatte (34) verläuft und mit Vorsprüngen (87, 88) an den entgegengesetzten Armenden (82, 84) der Wippe (80; 80A) zusammenwirkt, um diese in Verriegelungsstellung zu halten, wodurch während der Bewegung der Schieberplatte (34) zwischen den Enden ihres Hubes eine Ausdehnung derselben verhindert wird, dadurch gekennzeichnet, daß die Wippe (80; 80A) mit dem Segmentteil (52; 52A) über einen zwischen dem Stift (110; 110A) und dem Schlitz (102; 102A) eingefügten Gleitstein (104; 104A) schwenkbar und gleitbar gekoppelt ist und daß der Schlitz (102; 102A) nahe bei der Gleitfläche (60) und die Schwenkachse (b) weiter entfernt von der Gleitfläche (60) angeordnet ist.

2. Expansionsschieber nach Anspruch 1, bei welchem die Gleitfläche (60), wie an sich bekannt, bei der höchsten und bei der tiefsten Lage der bewegbaren Schieberplatte (34) entgegengesetzte Enden (66, 68) hat, so daß jeweils der in Bewegungsrichtung der Schieberplatte voreilende Vorsprung (87, 88) außer Eingriff mit der Gleitfläche gerät, wodurch die Wippe (102; 102A) um die Schwenkachse (b) verschwenkbar ist, sobald eine Relativbewegung zwischen Platten- und Segmentteil (44, 52; 44A, 52A) erfolgt.

3. Expansionsschieber nach Anspruch 1 oder 2, bei welchem in Plattenteil (44A) und im Segmentteil (52A) eine Ausnehmung (120) vorgesehen ist, in welcher ein Zapfen (108A) und der Stift (110A) angeordnet sind, wobei die Wippe (80A) eine vorspringende Schulter (126) hat, die in der Ausnehmung aufgenommen und mit dem Zapfen schwenkbar verbunden ist.

FIG. 1

FIG. 2

FIG. 3

FIG. 4

FIG. 5

FIG. 6

5